# EUROPÄISCHE PATENTSCHRIFT

(11) **EP 1 167 429 B1**
(45) Veröffentlichungstag und Bekanntmachung des Hinweises auf die Patenterteilung: **21.01.2004**
(21) Anmeldenummer: 00401675.4
(22) Anmeldetag: 14.06.2000
(51) Int. Cl.: C08K 3/22, C08K 13/02, C08K 5/521, G02B 1/04

(54) **Mischung für Mäntel von optischen oder elektischen Kabeln**
Mixture for optical or electrical cable sheaths
Mélange pour gaines de cables optiques or électriques

(43) Veröffentlichungstag der Anmeldung: 02.01.2002
(73) Patentinhaber: Nexans, 75008 Paris (FR)
(72) Erfinder: Mehl, Alfred Dipl.-Ing., 91166 Georgensgmünd (DE)
(74) Vertreter: Döring, Roger, Dipl.-Ing.

(56) Entgegenhaltungen:
- EP-A- 0 062 210
- EP-A- 0 392 147
- EP-A- 0 617 042
- EP-A- 0 791 613
- DE-A- 2 263 005
- DE-A- 2 447 943
- PATENT ABSTRACTS OF JAPAN vol. 017, no. 274 (C-1064), 27. Mai 1993 (1993-05-27) & JP 05 009376 A (NIHON MIRAKUTORAN KK), 19. Januar 1993 (1993-01-19)
- PATENT ABSTRACTS OF JAPAN vol. 006, no. 169 (C-122), 2. September 1982 (1982-09-02) & JP 57 083518 A (MITSUBISHI CHEM IND LTD), 25. Mai 1982 (1982-05-25)

## Beschreibung

Die Erfindung betrifft die Verwendung einer Mischung auf der Basis von Polyurethan für Mäntel von optischen oder elektrischen Kabeln.

Thermoplastisches Polyurethan (TPU) ist ein Werkstoff, der wegen seiner ausgezeichneten mechanischen Eigenschaften gern als Material für Mäntel von Kabel und Leitungen, die hohen mechanischen Beanspruchungen ausgesetzt sind, verwendet wird. Thermoplastisches Polyurethan zeigt jedoch kein flammwidriges Verhalten. Im Falle eines Brandes tropft das Polyurethan vom Kabel bzw. der Leitung ab.

Durch Zusätze sogenannter Flammschutzmittel kann thermoplastisches Polyurethan in Bezug auf die Flammfestigkeit so verbessert werden, daß die damit hergestellten Kabel und Leitungen den gestellten Anforderungen genügen.

Als Flammschutzmittel für thermoplastische Polyurethane sind halogenhaltige Substanzen in Verbindung mit Antimontrioxid, aber auch halogenfreie Substanzen wie z. B. Phosphorsäureester oder eine Kombination solcher Ester mit stickstoffhaltigen Verbindungen bekannt.

Halogenhaltige Substanzen haben den Nachteil, daß im Brandfall Verbindungen entstehen, die sowohl toxisch sind als auch korrosive Gase (Salzsäure) entwickeln. Compounds, die solche Flammschutzmittel enthalten, bestehen deshalb nicht die Anforderungen bezüglich der Korrosivität von Brandgasen (IEC 754-2) und Halogenfreiheit (VDE 0472/T.815).

Die halogenfreien Flammschutzmittel entwickeln zwar im Brandfall keine korrosiven Gasen, sie haben aber den Nachteil, daß, wenn nur Phosphorsäureester eingesetzt werden, die Flammwidrigkeit nicht ausreicht, bzw. wenn zusätzlich stickstoffhaltige Substanzen verwendet werden, beträchtliche Mengen an stickstoffhaltigen, toxischen Verbindungen wie Stickstoffoxide (NOₓ) und Cyanwasserstoff (HCN Blausäure) freigesetzt werden.

Aus der EP 0 537 013 B1 sind flammwidrige Silikonzusammensetzungen für Thermoplaste bekannt geworden, bei denen den im Normalfall brennbaren Thermoplasten ein Flammschutzmittel in Pulverform zugesetzt ist, welches aus Silikonöl, Silikonharz sowie Magnesiumhydroxid jeweils in ganz bestimmtem Verhältnis zueinander besteht.

Der Thermoplast kann ein Polyethylen, Polypropylen, Polycarbonat, Polystyren, Polyurethan, Polyamid oder ein anderer Thermoplast sein.

Der Mischung können ferner Salze der phosporigen Säure sowie als Füllstoff u. a. Aluminiumoxidtrihydrat zugesetzt werden.

Der wesentliche Effekt hinsichtlich der Flammwidrigkeit wird bei der EP 0 537 013 B1 durch das Silikonöl, das in dem Silikonöl lösbare Silikonharz und das Magnesiumhydroxid erreicht.

Die EP 0 791 613 A1 offenbart ein Einkomponenten-Polyurethansystem, welches ein wasserhaltiges Mineral mit einem Wassergehalt von weniger als 0,1 Gew.% in Gegenwart von mindestens einer wasserbindenden Verbindung enthält, welche eine wasserreaktive Gruppe und/oder deren Reaktionsprodukt mit Wasser enthält, wobei die wasserbindende Verbindung maximal in einer Menge vorhanden ist, die bezogen auf die wasserreaktiven Gruppen, den max. 0,1 Gew.% Wasser im Mineral entspricht. Bei diesem Einkomponenten-Polyurethansystem handelt es sich nicht um einen Thermoplasten, sondern um ein vergießbares feuchtigkeitshärtendes System, welches für extrudierte Kabelmäntel nicht geeignet ist und für die Beschichtung von Baumaterialien eingesetzt wird.

Aus der DE-22 63 005 A ist eine feuerhemmende Zubereitung bekannt, welche ein Phosphatester und Aluminiumoxidtrihydrat enthält. Die Zubereitung hat als Basiswerkstoff ein natürliches oder synthetisches Polymerisat oder Harz, welches beispielsweise Polyurethan sein kann. Die Zusammensetzung wird zur Herstellung von Filmen, Folien und anderen geformten Gegenständen oder als Schaum für Polster- und Teppichrückenbestandteile eingesetzt.

Der vorliegenden Erfindung liegt die Aufgabe zugrunde, eine Mischung auf der Basis von thermoplastischem Polyurethan bereitzustellen, die weder halogenhaltige noch stickstoffhaltige Substanzen enthält und die Vorschriften nach IEC 754-2 und VDE 0472/T.815 erfüllt.

Diese Aufgabe wird durch das im Kennzeichen des Anspruchs 1 Erfaßte gelöst.

Weitere vorteilhafte Ausgestaltungen der Erfindung sind in den Unteransprüchen erfaßt.

Die Mischung nach der Lehre der Erfindung besteht die Anforderungen bezüglich Flammwidrigkeit, Korrosivität und Halogenfreiheit und entwickelt im Brandfall von den toxischen Substanzen NOₓ und NCN nur einen Bruchteil dessen, was beim Einsatz der bekannten Produkte freigesetzt wird.

Die Erfindung ist anhand eines Ausführungsbeispiels näher beschrieben.
Aus
100 Teilen Polyetherurethan Shore Härte A87
18,6 Teilen Resorcinol- bis - diphenylphosphat
66,7 Teilen Aluminumhydroxid bzw. Aluminiumoxidtrihydrat
0,6 Teilen Erucasöureamid
wurde ein Compound hergestellt und der Compound granuliert. Das Granulat wurde in einem Extruder eingegeben und bei einer Temperatur von 200 °C auf eine aus mehreren miteinander verseilten isolierten elektrischen Leiter bestehende Kabelseele extrudiert.

Nach dem Abkühlen wurden mehrere Proben einem Brandtest unterzogen. Es wurden keine korrosiven Gase freigesetzt und lediglich eine geringe Menge an toxischen Gasen gemessen.

## Patentansprüche

1. Verwendung einer Mischung auf der Basis von thermoplastischem Polyurethan mit Zusätzen sogenannter Flammschutzmittel, welcher als Flammschutzmittel ein Metallhydroxid sowie zumindest ein Phosphorsäureester zugesetzt ist, für Mäntel von optischen oder elektrischen Kabeln.

2. Verwendung einer Mischung nach Anspruch 1, **dadurch gekennzeichnet, daß** das Polyurethan ein Polyetherurethan ist.

3. Verwendung einer Mischung nach Anspruch 1 oder 2, **dadurch gekennzeichnet, daß** als Metallhydroxid Aluminiumhydroxid bzw. Aluminiumoxidtrihydrat verwendet wird.

4. Verwendung einer Mischung nach Anspruch 1 oder 2, **dadurch gekennzeichnet, daß** als Metallhydroxid Magnesiumhydroxid verwendet wird.

5. Verwendung einer Mischung nach einem der Ansprüche 1 bis 4, **dadurch gekennzeithnet,** daß der Phosphorsäureester ein schwer flüchtiger Phosphorsäureester ist.

6. Verwendung einer Mischung nach einem der Ansprüche 1 bis 5, **dadurch gekennzeichnet, daß** die Mischung 30 bis 70 Teile Polyetherurethan, 25 bis 60 Teile Aluminiumhydroxid bzw. Aluminiumoxidtrihydrat sowie ggfs. Verarbeitungshilfen, Farbstoffe etc. enthält.

7. Verwendung einer Mischung nach einem der Ansprüche 1 bis 6, **dadurch gekennzeichnet, daß** als Phosphorsäureester Resorcinol- bis -diphenylphosphat verwendet wird.

8. Verwendung einer Mischung nach einem der Ansprüche 1 bis 7, **dadurch gekennzeichnet, daß** der Mantel vernetzt ist, vorzugsweise strahlenvernetzt ist.

## Claims

1. Employment of an admixture based on thermoplastic polyurethane, to which a so-called "flame retardant" to which a metal hydroxide and at least one phosphoric-acid ester have been added as flame retardants, for cladding optical or electrical cables.

2. Employment of an admixture according to claim 1, wherein the polyurethane is a polyetherurethane.

3. Employment of an admixture according to claim 1 or claim 2, wherein aluminum hydroxide or aluminum-oxide trihydrate is employed as the metal hydroxide.

4. Employment of an admixture according to claim 1 or claim 2, wherein magnesium hydroxide is employed as the metal hydroxide.

5. Employment of an admixture according to any of claims 1 - 4, wherein the phosphoric-acid ester is a low-volatility phosphoric-acid ester.

6. Employment of an admixture according to any of claims 1 - 5, wherein the admixture contains 50 to 70 parts polyetherurethane and 25 to 60 parts aluminum hydroxide or aluminum-oxide trihydrate, along with processing aids, dyes, etc., where necessary.

7. Employment of an admixture according to any of claims 1 - 6, wherein resorcinol-bis-diphenylphosphate is employed as the phosphoric-acid ester.

8. Employment of an admixture according to any of claims 1 - 7, wherein the cladding is cross-linked, preferably radiation cross-linked.

## Revendications

1. Emploi pour les gaines de câbles optiques ou électriques d'un mélange à base de polyuréthane thermoplastique avec ajout de produits dits retardateurs de flammes auxquels sont associés, au titre de produits retardateurs de flammes, un hydroxyde métallique, ainsi qu'au moins un ester phosphorique.

2. Emploi selon la revendication 1 d'un mélange **caractérisé par le fait que** le polyuréthane est un polyethéruréthane.

3. Emploi selon la revendication 1 ou 2 d'un mélange **caractérisé par le fait que** l'hydroxyde métallique utilisé est de l'hydroxyde d'aluminium ou du trihydrate d'oxyde d'aluminium.

4. Emploi selon la revendication 1 ou 2 d'un mélange **caractérisé par le fait que** l'hydroxyde métallique utilisé est de l'hydroxyde de magnésium.

5. Emploi selon l'une des revendications 1 à 4 d'un mélange **caractérisé par le fait que** l'ester phosphorique est un ester phosphorique peu volatil.

6. Emploi selon l'une des revendications 1 à 5 d'un mélange **caractérisé par le fait que** le mélange contient 30 à 70 parts de polyethéruréthane, 25 à 60 parts d'hydroxyde d'aluminium ou de trihydrate d'oxyde d'aluminium, ainsi que, le cas échéant, des produits auxiliaires, des matières colorantes, etc.

7. Emploi selon l'une des revendications 1 à 6 d'un mélange **caractérisé par le fait que** l'ester phosphorique utilisé est du résorcinol bis-diphénylphosphate.

8. Emploi selon l'une des revendications 1 à 7 d'un mélange **caractérisé par le fait que** la gaine est réticulée, de préférence réticulée par irradiation.
